# EUROPEAN PATENT SPECIFICATION

(11) **EP 3 959 490 B1**
(45) Date of publication and mention of the grant of the patent: **29.03.2023**
(21) Application number: 19720833.3
(22) Date of filing: 26.04.2019
(51) Int. Cl.: G01F 23/284, G01S 13/88, G01S 7/02, G01S 13/22

(54) **PULSED RLG WITH IMPROVED RESISTANCE TO SIGNAL DISTURBANCE**
GEPULSTES RADARFÜLLSTANDSMESSGERÄT MIT VERBESSERTER SIGNALSTÖRUNGSBESTÄNDIGKEIT
CAPTEUR DE NIVEAU RADAR À IMPULSIONS PRÉSENTANT UNE RÉSISTANCE AMÉLIORÉE À UNE PERTURBATION DE SIGNAL

(43) Date of publication of application: 02.03.2022
(73) Proprietor: Rosemount Tank Radar AB, 435 23 Mölnlycke (SE)
(72) Inventor: ERIKSSON, Mikael, 593 52 Västervik (SE); NILSSON, Leif, 583 36 Linköping (SE); NYBERG, Håkan, 587 37 Linköping (SE)
(74) Representative: Kransell & Wennborg KB
(86) International application number: PCT/EP2019/060777
(87) International publication number: WO 2020/216451

(56) References cited:
- WO-A1-2018/206277
- US-A1- 2002 020 216
- US-A1- 2014 253 366
- US-A1- 2015 192 449
- US-A1- 2017 059 691

## Description

### Technical Field of the Invention

The present invention relates to a method of determining a filling level, and to a radar level gauge system.

### Technical Background

Pulsed radar level gauging is a cost-efficient and convenient way of measuring the filling levels of tanks in many applications, for example in the process industry. In environments where pulsed radar level gauge systems are commonly used, there may be many other sources of electromagnetic signals, such as other pulsed radar level gauge systems. It has been found that the performance of a pulsed radar level gauge system may be degraded due to disturbance from other sources of electromagnetic signals. It would therefore be desirable to provide for improved pulsed radar level gauging, in particular pulsed radar level gauging that is more resistant to signal disturbance. US2002020216-A1 discloses a filling-level measuring device with a transmitter, a receiver for an echo of a signal emitted by the transmitter and an evaluation circuit for measuring the filling level on the basis of the transit times of different portions of the echo, wherein the transmitter and the receiver are suitable for operation with a plurality of frequencies on the part of the emitted signal and the echo, wherein the frequency of the transmitter and the receiver module can be changed cyclically during operation.

### Summary

In view of the above, a general object of the present invention is to provide for improved pulsed radar level gauging, in particular pulsed radar level gauging that is more resistant to signal disturbance.

According to a first aspect of the present invention, it is therefore provided a method of determining a filling level of a product in a tank using a radar level gauge system including a transceiver, a signal propagation device and processing circuitry, the method comprising the steps of: performing, for each transmit pulse repetition frequency in a sequence of different transmit pulse repetition frequencies, a measurement operation including: generating and transmitting an electromagnetic transmit signal in the form of a pulse train of transmit pulses, the pulse train exhibiting the transmit pulse repetition frequency; propagating the transmit signal towards a surface of the product in the tank; returning an electromagnetic reflection signal resulting from reflection of the transmit signal at the surface back towards the transceiver; and receiving the reflection signal. The method further comprises the steps of determining, for each measurement operation, a measure indicative of signal disturbance of the reflection signal received in the measurement operation; evaluating, for each measurement operation, the measure indicative of signal disturbance of the reflection signal in view of a predefined signal disturbance criterion; and determining the filling level based on at least one of the reflection signals fulfilling the signal disturbance criterion.

The tank may be any container or vessel capable of containing a product, and may be metallic, or partly or completely non-metallic, open, semi-open, or closed. Furthermore, the filling level of the product in the tank may be determined directly by using a signal propagation device propagating the transmit signal towards the product inside the tank, or indirectly by using a propagation device disposed inside a so-called chamber located on the outside of the tank, but being in fluid connection with the inside of the tank in such a way that the level in the chamber corresponds to the level inside the tank.

The present invention is based on the realization that a convenient and effective way of handling external signal disturbances potentially affecting the performance of a pulsed radar level gauge system would be to perform measurements using several pulse repetition frequencies (PRFs), evaluate the measurements, and discarding disturbed measurements. Hereby, robust pulsed radar level gauging can be achieved without the need for monitoring or evaluating potentially disturbing signals etc. Furthermore, disturbance signals with different frequencies can be handled, by discarding different sets of measurements.

According to embodiments of the present invention, the sequence of different pulse repetition frequencies may include at least three different pulse repetition frequencies.

Furthermore, the different pulse repetition frequencies may differ from each other by at least 5%, advantageously at least 10%, to increase the probability of performing undisturbed measurement operations.

According to embodiments, each measurement operation may comprise generating a pulsed reference signal having a reference pulse repetition frequency.

The reference pulse repetition frequency may be different for different measurement operations.

According to embodiments, a difference between the transmit pulse repetition frequency and the reference pulse repetition frequency may be substantially the same for each of the measurement operations. While not being necessary, this may simplify the measurement operations and maximize the use of the available bandwidth of measurement electronics comprised in the radar level gauge system.

Furthermore, each measurement operation may comprise time-correlating the reference signal and the reflection signal to form a measurement signal.

For pulsed radar level gauge systems, time expansion techniques may be used to resolve the time-of-flight.

In such pulsed radar level gauge systems a transmit signal in the form of a first pulse train with a first pulse repetition frequency is propagated towards the surface of the product in the tank, and a surface reflection signal resulting from reflection at the surface is received.

A reference signal in the form of a second pulse train having a second pulse repetition frequency, controlled to differ from the first pulse repetition frequency by a given frequency difference, may also be generated.

At the beginning of a measurement operation, the transmit signal and the reference signal may be synchronized to have the same phase. Due to the difference in pulse repetition frequency, the phase difference between the transmit signal and the reference signal will gradually increase during the measurement operation.

During the measurement operation, the surface reflection signal may be time-correlated with the reference signal, to form a measurement signal based on a time correlation between the surface reflection signal and the reference signal. Based on the measurement signal, the filling level can be determined. According to one example, such time correlation may be achieved by sampling the surface reflection signal at sampling times determined by the timing of the reference pulses. For instance, the reference pulses may be used to trigger sampling circuitry coupled to the signal propagation device and configured to sample the reflection signal.

According to various embodiments of the present invention, the above-mentioned measure indicative of signal disturbance of the reflection signal received in the measurement operation may be determined based on the measurement signal formed in the measurement operation. This measurement signal may sometimes be referred to as an "echo curve".

According to a second aspect of the present invention, it is provided a radar level gauge system for determining the filling level of a product in a tank, comprising: a transceiver for generating, transmitting and receiving electromagnetic signals; a propagation device coupled to the transceiver for propagating an electromagnetic transmit signal from the transceiver towards a surface of the product in the tank, and returning an electromagnetic reflection signal resulting from reflection of the transmit signal at the surface of the product; and processing circuitry coupled to the transceiver, and configured to: control the transceiver to perform, for each transmit pulse repetition frequency in a sequence of different transmit pulse repetition frequencies, a measurement operation including: generating and transmitting the transmit signal in the form of a pulse train of transmit pulses, the pulse train exhibiting the transmit pulse repetition frequency; and receiving the reflection signal; determine, for each measurement operation, a measure indicative of signal disturbance of the reflection signal received in the measurement operation; evaluate, for each measurement operation, the measure indicative of signal disturbance of the reflection signal in view of a predefined signal disturbance criterion; and determine the filling level based on at least one of the reflection signals fulfilling the signal disturbance criterion.

The "transceiver" may be one functional unit capable of transmitting and receiving electromagnetic signals or may be a system comprising separate transmitter and receiver units.

It should be noted that the processing circuitry may be provided as one device or several devices working together.

The propagation device may be a radiating antenna, or a probe extending towards and into the product in the tank. In embodiments where the propagation device is a probe, it should be understood that the probe is a waveguide designed for guiding electromagnetic signals. The probe may be rigid or flexible and may advantageously be made of metal, such as stainless steel.

According to embodiments, the transceiver may comprise a PLL (phase locked loop) circuit controllable to generate signals having the transmit pulse repetition frequency.

Further embodiments and variations of this second aspect of the present invention are largely analogous to those described above in respect of the first aspect of the invention.

In summary, the present invention thus relates to a method and system of determining a filling level of a product in a tank, the method comprising and the system being configured for, for each transmit pulse repetition frequency in a sequence of different transmit pulse repetition frequencies: generating and transmitting an electromagnetic transmit signal in the form of a pulse train of transmit pulses, the pulse train exhibiting the transmit pulse repetition frequency; propagating the transmit signal towards a surface of the product in the tank; returning an electromagnetic reflection signal resulting from reflection of the transmit signal at the surface back towards the transceiver; receiving the reflection signal; determining a measure indicative of signal disturbance of the reflection signal; evaluating the measure indicative of signal disturbance of the reflection signal in view of a predefined signal disturbance criterion; and determining the filling level based on at least one of the reflection signals fulfilling the signal disturbance criterion.

### Brief Description of the Drawings

These and other aspects of the present invention will now be described in more detail, with reference to the appended drawings showing a currently preferred embodiment of the invention, wherein:
Fig 1 schematically illustrates an exemplary tank arrangement comprising a radar level gauge system according to an embodiment of the present invention;
Fig 2 is schematic illustration of the measurement unit comprised in the radar level gauge system in fig 1;
Fig 3 is a schematic block diagram of the transceiver and measurement processor comprised in a radar level gauge system according to an embodiment of the present invention;
Fig 4 is a flow-chart schematically illustrating example embodiments of the method according to the present invention;
Fig 5 schematically illustrates examples of the transmit signal, the reflection signal and the reference signal;
Figs 6A-B are exemplary echo curves that conceptually illustrate different examples of signal disturbance criteria;
Fig 7 is a conceptual illustration of an exemplary sequence of pulse repetition frequencies; and
Fig 8 is a flow-chart schematically illustrating further example embodiments of the method according to the present invention.

### Detailed Description of Example Embodiments of the Invention

In the present detailed description, various embodiments of the present invention are mainly discussed with reference to a pulsed radar level gauge system with a signal propagation device in the form of a probe, and wireless communication capabilities.

It should be noted that this by no means limits the scope of the present invention, which also covers a pulsed radar level gauge system with another type of signal propagation device, such as a radiating antenna, as well as a pulsed radar level gauge system configured for wired communication, for example using a 4-20 mA current loop and/or other wired means for communication.

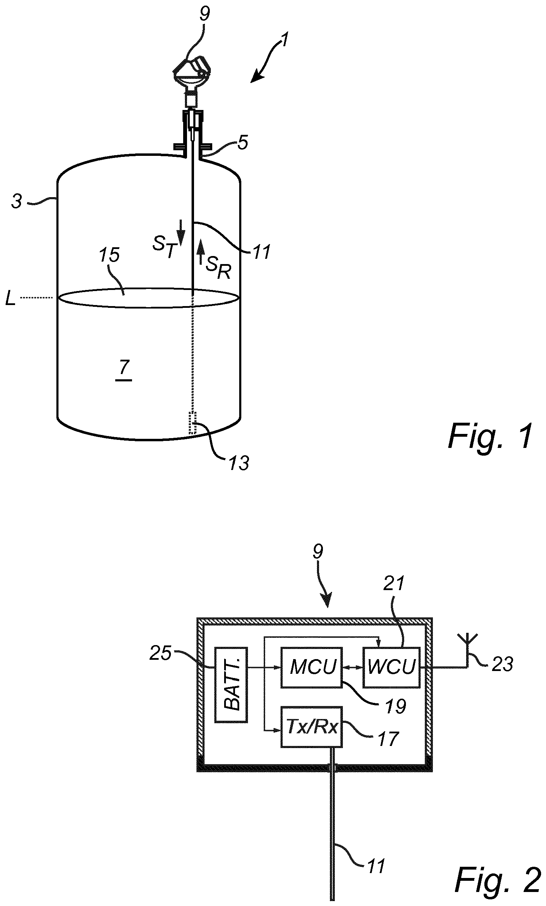

Fig 1 schematically shows an exemplary radar level gauge system 1 of GWR (Guided Wave Radar) type installed at a tank 3 having a tubular mounting structure 5 (often referred to as a "nozzle") extending substantially vertically from the roof of the tank 3.

The radar level gauge system 1 is installed to measure the filling level of a product 7 in the tank 3. The radar level gauge system 1 comprises a measuring unit 9 and a propagation device, here in the form of a single conductor probe 11 extending from the measuring unit 9, through the tubular mounting structure 5, towards and into the product 7. In the example embodiment in fig 1, the single conductor probe 11 is a wire probe, that has a weight 13 attached at the end thereof to keep the wire straight and vertical.

By analyzing a transmit signal S_{T} being guided by the probe 11 towards the surface 15 of the product 7, and a reflection signal S_{R} traveling back from the surface 15, the measurement unit 9 can determine the filling level L of the product 7 in the tank 3. It should be noted that, although a tank 3 containing a single product 7 is discussed herein, the distance to any material interface along the probe can be measured in a similar manner.

The radar level gauge system in fig 1 will now be described in more detail with reference to the schematic block diagram in fig 2.

Referring to the schematic block diagram in fig 2, the measurement unit 9 of the exemplary radar level gauge system 1 in fig 1 comprises a transceiver 17, a measurement control unit (MCU) 19, a wireless communication control unit (WCU) 21, a communication antenna 23, and an energy store, such as a battery 25.

As is schematically illustrated in fig 2, the MCU 19 controls the transceiver 17 to generate, transmit and receive electromagnetic signals. The transmitted signals pass through a feed-through to the probe 11, and the received signals pass from the probe 11 through the feed-through to the transceiver 17.

The MCU 19 determines the filling level L of the product 7 in the tank 3 and provides a value indicative of the filling level to an external device, such as a control center, from the MCU 19 via the WCU 21 through the communication antenna 23. The radar level gauge system 1 may advantageously be configured according to the so-called WirelessHART communication protocol (IEC 62591).

Although the measurement unit 9 is shown to comprise an energy store (battery 25) and to comprise devices (such as the WCU 21 and the communication antenna 23) for allowing wireless communication, it should be understood that power supply and communication may be provided in a different way, such as through communication lines (for example 4-20 mA lines).

The local energy store need not (only) comprise a battery, but may alternatively, or in combination, comprise a capacitor or super-capacitor.

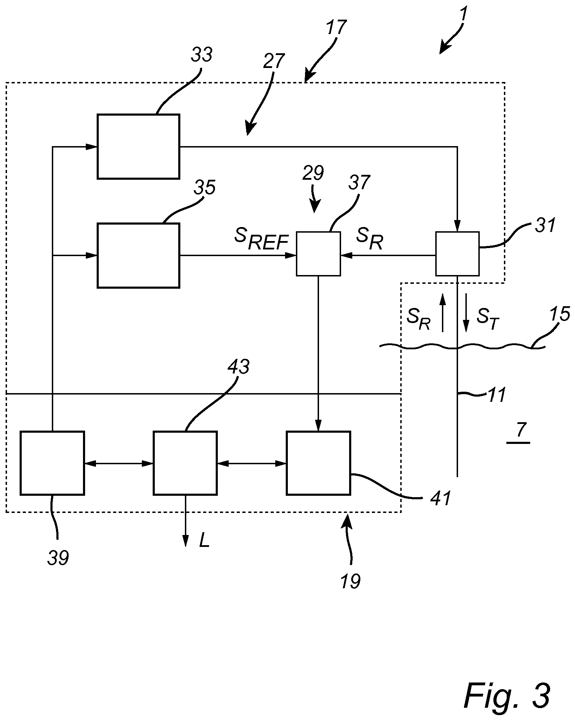

The radar level gauge system 1 in fig 1 will now be described in greater detail with reference to the schematic block diagram in fig 3.

As is schematically shown in fig 3, the transceiver 17 comprises a transmitter branch 27 for generating and transmitting a transmit signal S_{T} towards the surface 15 of the product 7 in the tank, and a receiver branch 29 for receiving and operating on the reflection signal S_{R} resulting from reflection of the transmit signal S_{T} at the surface 15 of the product 7. As is indicated in fig 3, the transmitter branch and the receiver branch are both connected to a directional coupler 31 to direct signals from the transmitter branch to the probe 11 and to direct reflected signals being returned by the probe 11 to the receiver branch.

The transceiver 17 comprises pulse generating circuitry, here in the form of a first pulse forming circuit 33 and a second pulse forming circuit 35. The transmit signal S_{T} is generated by the first pulse forming circuit 33, and a reference signal S_{REF} is generated by the second pulse forming circuit 35.

The transmitter branch 27 comprises the first pulse forming circuit 33, and the receiver branch 29 comprises the second pulse forming circuit 35 and measurement circuitry 37. As is, *per se,* well known in the art, the measurement circuitry may comprise a time-correlator, such as a sampler controlled to sample the reflection signal S_{R} at sampling times determined by the reference signal S_{REF}.

With continued reference to fig 3, the processing circuitry (MCU) 19 comprises a timing control unit 39, a signal disturbance evaluation unit 41, and a level determination unit 43. The timing control unit 39 is coupled to the transceiver 17 for controlling operation of the first pulse forming circuit 33 and the second pulse forming circuit 35. The signal disturbance evaluation unit 41 is coupled to the transceiver 17 for receiving a measurement signal S_{M} provided by the measurement circuitry 37. The level determination unit 43 determines the filling level based on input from at least the signal disturbance evaluation unit 41 and provides a value indicative of the filling level L.

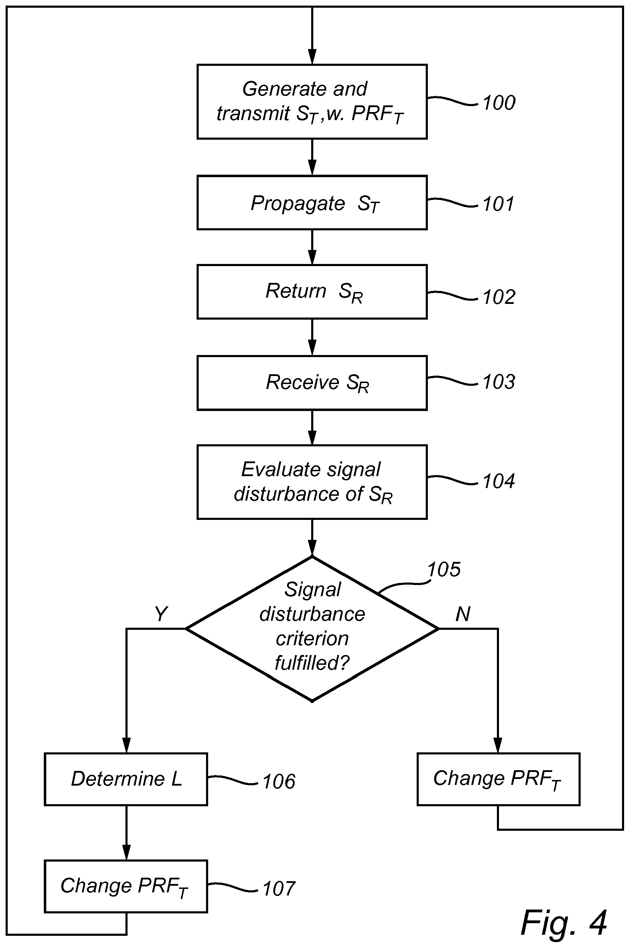

Embodiments of the method according to the present invention will now be described with reference to the flow-chart in fig 4. In a first sequence of steps 100-103, a measurement operation is performed for each transmit pulse repetition frequency PRF_{T} in a sequence of different transmit pulse repetition frequencies. In the first step 100, an electromagnetic transmit signal S_{T} is generated and transmitted, by the transceiver 17, in the form of a pulse train of transmit pulses, exhibiting the transmit pulse repetition frequency PRF_{T}. In the next step 101, the transmit signal S_{T} is propagated, by the signal propagation device 11, towards the surface 15 of the product 7 in the tank 3. In the subsequent step 102, an electromagnetic reflection signal S_{R} resulting from reflection of the transmit signal S_{T} at the surface 15 is returned by the signal propagation device 15 back towards the transceiver 17, and the transceiver 17 receives the reflection signal SR in step 103.

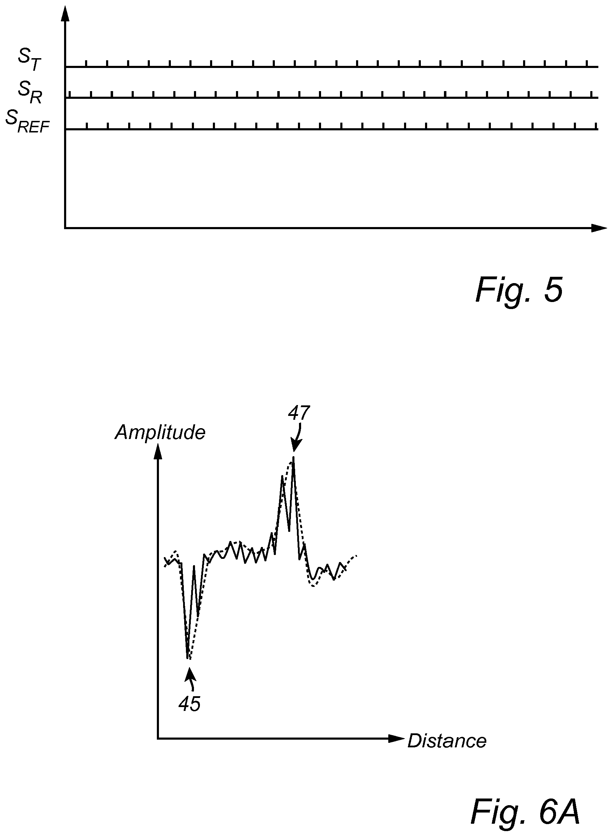

An example of the transmit signal S_{T} and an example of the resulting reflection signal S_{R} are schematically shown in fig 5 (the two signals at the top in the diagram in fig 5). As is indicated in fig 5, the transmit signal S_{T} and the reflection signal S_{R} have the same pulse repetition frequency (the transmit pulse repetition frequency PRF_{T}), but the reflection signal S_{R} is delayed from traveling along the probe 11 to the surface 15 of the product 7 and back.

Returning to the flow-chart in fig 4, the signal disturbance of the reflection signal S_{R} received during the present measurement operation (measurement operation n) is evaluated in step 104. During evaluation of the signal disturbance, a measure indicative of the signal disturbance of the reflection signal S_{R} is determined, and evaluated in view of a predefined signal disturbance criterion. The predefined signal disturbance criterion may be an absolute criterion, where the reflection signal S_{R} is considered to have fulfilled the criterion if certain predefined values are reached. Alternatively, the predefined signal disturbance criterion may be a relative criterion, where the reflection signal S_{R} with the highest score among a plurality of evaluated reflection signals is considered to have fulfilled the criterion. A combination of absolute and relative criteria may also be used. If, for example, one or several reflection signals fulfill(s) an absolute criterion that or those reflection signals can be considered to have fulfilled the predefined signal disturbance criterion. If, on the other hand, none of the evaluated reflection signals fulfills the absolute criterion, the relative criterion may be applied, so that the "best" reflection signal can be considered to have fulfilled the predefined signal disturbance criterion.

Furthermore, the reflection signal S_{R} may be evaluated in respect of the signal disturbance criterion directly or indirectly. In a direct evaluation, the noise level of the reflection signal S_{R} may be measured directly, and compared against a predefined signal disturbance criterion. In an indirect evaluation, another signal based on the reflection signal S_{R} may be evaluated. In embodiments, a time-expanded measurement signal S_{M} may advantageously be evaluated.

To form a time-expanded measurement signal S_{M}, a reference signal S_{REF} may optionally be generated in each measurement operation. The reference signal S_{REF} is a pulse train with a pulse repetition frequency that is controlled to differ from the transmit pulse repetition frequency PRF_{T} by a predetermined frequency difference Δf. When a measurement sweep starts, the reference signal S_{REF} and the transmit signal S_{T} are in phase, and then the time until the reference signal "catches up with" the reflected signal S_{R} is determined. Based on this time and the frequency difference Δf, the distance to the surface 15 can be determined. An example reference signal S_{R} is schematically illustrated as the third signal from the top in fig 5.

The time-expansion technique that was briefly described in the previous paragraph is well known to the person skilled in the art, and is widely used in pulsed radar level gauge systems.

The output from the measurement circuitry 37 in fig 3 may be a representation of the time-correlation between the reflection signal S_{R} and the reference signal S_{REF} (and thus with the transmit signal S_{T}) across the sweep, and may be provided to the signal disturbance evaluation unit 41 in the form of a so-called echo curve. The signal disturbance of the reflection signal S_{R} may be evaluated in step 105 by evaluating the echo curve of the measurement operation.

Two example signal disturbance criteria will now be introduced with reference to figs 6A-B, which show two examples of relations between echo curves formed based on undisturbed and disturbed reflection signals.

Referring first to fig 6A, a first example of an echo curve (solid line) formed based on a disturbed reflection signal (a disturbed echo curve) is shown together with an echo curve (dashed line) formed based on an undisturbed reflection signal (an undisturbed echo curve). There is a strong negative peak 45 and a strong positive peak 47 in the undisturbed echo curve. The negative peak 45 results from reflection at a reference impedance transition at the feed-through between the outside and the inside of the tank 3, and the positive peak 47 results from reflection at the surface 15 of the product 7 in the tank 3. By comparing the disturbed echo curve with the undisturbed echo curve, it is clear that the peaks of the disturbed echo curve are too narrow, so that about two peaks of the disturbed echo curve fit inside a single peak of the undisturbed echo curve. To distinguish the type of signal disturbance illustrated in fig 6A, the signal disturbance criterion may thus include a requirement on the pulse width of peaks in the echo curve. For example, a predefined minimum pulse width may be comprised in the signal disturbance criterion.

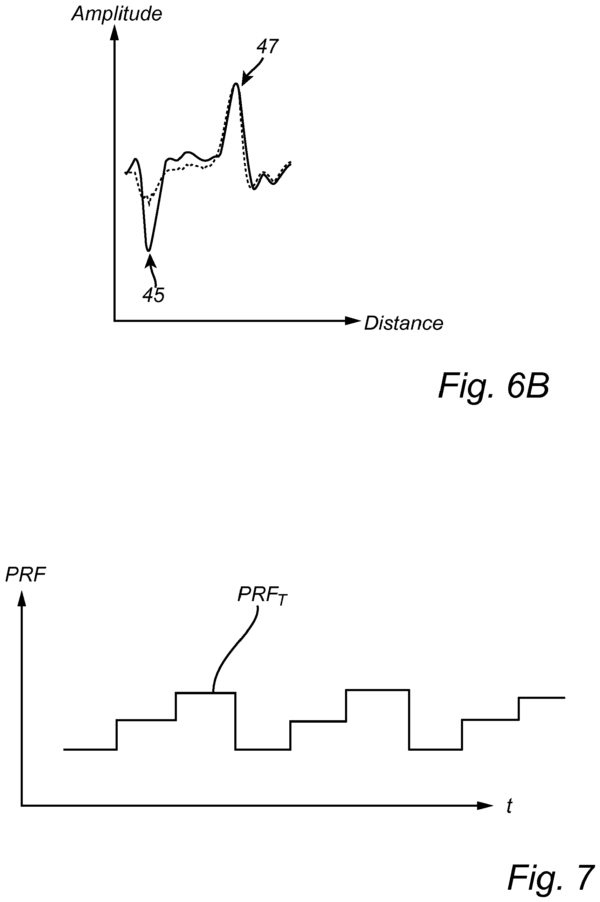

Turning then to fig 6B, a second example of an echo curve (solid line) formed based on a disturbed reflection signal (a disturbed echo curve) is shown together with an echo curve (dashed line) formed based on an undisturbed reflection signal (an undisturbed echo curve). Like in fig 6A, there is a strong negative peak 45 and a strong positive peak 47 in the undisturbed echo curve. The negative peak 45 results from reflection at a reference impedance transition at the feed-through between the outside and the inside of the tank 3, and the positive peak 47 results from reflection at the surface 15 of the product 7 in the tank 3. By comparing the disturbed echo curve with the undisturbed echo curve, it is clear that the amplitude of at least the first peak 45 of the disturbed echo curve is much lower than expected (much lower than the amplitude of the corresponding peak of the undisturbed echo curve). Depending on the signal disturbance affecting the measurement, one or several peaks may instead be far too high. To distinguish the type of signal disturbance illustrated in fig 6B, the signal disturbance criterion may thus include a requirement on the relation between measured and expected pulse amplitudes in the echo curve. For example, a predefined minimum (absolute and/or relative) pulse amplitude may be comprised in the signal disturbance criterion.

Returning to the flow-chart in fig 4, the method proceeds in different paths depending on the result of the evaluation carried out in step 105. If the signal disturbance criterion is determined to be fulfilled, the method proceeds to step 106, where the filling level L is determined based on at least one reflection signal S_{R} fulfilling the signal disturbance criterion. This filling level determination may be determined based on a direct correlation between the transmit signal S_{T} and the reflection signal S_{R}, or using the (undisturbed) echo curve, where the filling level L can be determined based on the distance to the surface reflection peak 47 and a known arrangement of the radar level gauge system 1 at the tank 3.

After having determined the filling level L, the method proceeds to change the transmit pulse repetition frequency PRF_{T} in step 107, and then the method returns to step 100. If the signal disturbance criterion is instead determined to not be fulfilled in step 105, the method proceeds to change the transmit pulse repetition frequency PRF_{T} in step 108, and then the method returns to step 100.

Various schemes for changing the transmit pulse repetition frequency PRF_{T} between measurement operations may be used, involving few or many different pulse repetition frequencies, different frequency steps, and different durations (for example in terms of number of sweeps). An example scheme for changing the transmit pulse repetition frequency is schematically shown in fig 7, where it can be seen that the PRF_{T} is cycled through three different PRFs, with one measurement sweep per PRF and a relative difference between adjacent PRFs of about 10%.

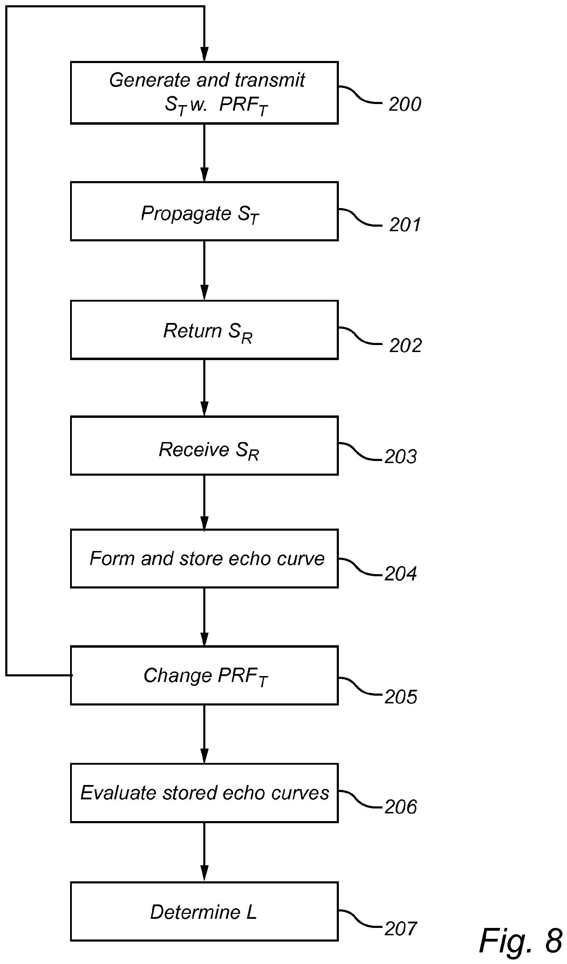

Finally, referring to the flow-chart in fig 8, other embodiments of the method according to the present invention will be described. The following description focuses on differences in relation to embodiments described above.

As can be seen in fig 8, steps 200-203 correspond to steps 100-103 in fig 4. In the subsequent step 204, an echo curve or similar representation is formed and stored based on the reflection signal S_{R}. The echo curve may be formed using, for example, the time-expansion techniques described above on relation to fig 4. Thereafter, the transmit pulse repetition frequency PRF_{T} is changed in step 205, and the method goes back to step 200. However, the method also proceeds to step 206 to evaluate the stored echo curves in respect of a predefined signal disturbance criterion as described above. Finally, the filling level is determined, in step 207, based on one or more echo curves fulfilling the signal disturbance criterion.

The person skilled in the art realizes that the present invention by no means is limited to the preferred embodiments described above. On the contrary, many modifications and variations are possible within the scope of the appended claims.

## Claims

1. A method of determining a filling level of a product in a tank using a radar level gauge system including a transceiver, a signal propagation device and processing circuitry, the method comprising the steps of:
performing, for each transmit pulse repetition frequency in a sequence of different transmit pulse repetition frequencies, a measurement operation including:
generating and transmitting an electromagnetic transmit signal in the form of a pulse train of transmit pulses, the pulse train exhibiting the transmit pulse repetition frequency;
propagating the transmit signal towards a surface of the product in the tank;
returning an electromagnetic reflection signal resulting from reflection of the transmit signal at the surface back towards the transceiver; and
receiving the reflection signal; and
determining, for each measurement operation, a measure indicative of signal disturbance of the reflection signal received in the measurement operation;
evaluating, for each measurement operation, the measure indicative of signal disturbance of the reflection signal in view of a predefined signal disturbance criterion; and
determining the filling level based on at least one of the reflection signals fulfilling the signal disturbance criterion.

2. The method according to claim 1, wherein the sequence of different pulse repetition frequencies includes at least three different pulse repetition frequencies.

3. The method according to claim 1 or 2, wherein each measurement operation comprises:
generating a pulsed reference signal having a reference pulse repetition frequency.

4. The method according to claim 3, wherein the reference pulse repetition frequency is different for different measurement operations.

5. The method according to claim 4, wherein a difference between the transmit pulse repetition frequency and the reference pulse repetition frequency is substantially the same for each of the measurement operations.

6. The method according to any one of claims 3 to 5, wherein each measurement operation comprises:
time-correlating the reference signal and the reflection signal to form a measurement signal.

7. The method according to claim 6, wherein the measure indicative of signal disturbance of the reflection signal received in the measurement operation is determined based on the measurement signal formed in the measurement operation.

8. The method according to any one of the preceding claims, comprising:
disregarding any reflection signal that fails to fulfill the signal disturbance criterion; and
determining the filling level based on at least one remaining reflection signal.

9. A radar level gauge system for determining the filling level of a product in a tank, comprising:
a transceiver for generating, transmitting and receiving electromagnetic signals;
a propagation device coupled to the transceiver for propagating an electromagnetic transmit signal from the transceiver towards a surface of the product in the tank, and returning an electromagnetic reflection signal resulting from reflection of the transmit signal at the surface of the product; and
processing circuitry coupled to the transceiver, and configured to:
control the transceiver to perform, for each transmit pulse repetition frequency in a sequence of different transmit pulse repetition frequencies, a measurement operation including:
generating and transmitting the transmit signal in the form of a pulse train of transmit pulses, the pulse train exhibiting the transmit pulse repetition frequency; and
receiving the reflection signal;
determine, for each measurement operation, a measure indicative of signal disturbance of the reflection signal received in the measurement operation;
evaluate, for each measurement operation, the measure indicative of signal disturbance of the reflection signal in view of a predefined signal disturbance criterion; and
determine the filling level based on at least one of the reflection signals fulfilling the signal disturbance criterion.

10. The radar level gauge system according to claim 9, wherein the processing circuitry is further configured to control the transceiver to generate a pulsed reference signal having a reference pulse repetition frequency that is different for different measurement operations.

11. The radar level gauge system according to claim 10, wherein a difference between the transmit pulse repetition frequency and the reference pulse repetition frequency is substantially the same for each of the measurement operations.

12. The radar level gauge system according to claim 10 or 11, wherein the transceiver comprises a signal correlator configured to time-correlate the reference signal and the reflection signal to form a measurement signal.

13. The radar level gauge system according to claim 12, wherein the processing circuitry is configured to determine the measure indicative of signal disturbance of the reflection signal based on the measurement signal formed by the signal correlator comprised in the transceiver.

14. The radar level gauge system according to any one of claims 9 to 13, wherein the processing circuitry is configured to:
disregard any reflection signal that fails to fulfill the signal disturbance criterion; and
determine the filling level based on at least one remaining reflection signal.

15. The radar level gauge system according to any one of claims 9 to 14, wherein the transceiver comprises a PLL controllable to generate signals having the transmit pulse repetition frequency.

## Patentansprüche

1. Verfahren zum Bestimmen eines Füllstands eines Produkts in einem Tank unter Verwendung eines Radarfüllstandanzeigesystems, das einen Sendeempfänger, eine Signalausbreitungsvorrichtung und eine Verarbeitungsschaltungsanordnung aufweist, wobei das Verfahren die Schritte umfasst zum:
Durchführen, für jede Sendeimpulswiederholfrequenz in einer Sequenz von unterschiedlichen Sendeimpulswiederholfrequenzen, eines Messvorgangs, umfassend:
Erzeugen und Senden eines elektromagnetischen Sendesignals in Form einer Impulsfolge von Sendeimpulsen, wobei die Impulsfolge die Sendeimpulswiederholfrequenz aufweist;
Ausbreiten des Sendesignals in Richtung einer Oberfläche des Produkts in dem Tank;
Rückführen eines elektromagnetischen Reflexionssignals, das sich aus einer Reflexion des Sendesignals an der Oberfläche ergibt, zurück in Richtung des Sendeempfängers; und
Empfangen des Reflexionssignals; und
Bestimmen, für jeden Messvorgang, eines Maßes, das eine Signalstörung des Reflexionssignals angibt, das in dem Messvorgang empfangen wird;
Bewerten, für jeden Messvorgang, des Maßes, das eine Signalstörung des Reflexionssignals angibt, hinsichtlich eines vordefinierten Signalstörungskriteriums; und
Bestimmen des Füllstands basierend auf mindestens einem der Reflexionssignale, die das Signalstörungskriterium erfüllen.

2. Verfahren nach Anspruch 1, wobei die Sequenz von unterschiedlichen Impulswiederholfrequenzen mindestens drei unterschiedliche Impulswiederholfrequenzen aufweist.

3. Verfahren nach Anspruch 1 oder 2, wobei jeder Messvorgang umfasst:
Erzeugen eines gepulsten Referenzsignals mit einer Referenzimpulswiederholfrequenz.

4. Verfahren nach Anspruch 3, wobei die Referenzimpulswiederholfrequenz für unterschiedliche Messvorgänge unterschiedlich ist.

5. Verfahren nach Anspruch 4, wobei eine Differenz zwischen der Sendeimpulswiederholfrequenz und der Referenzimpulswiederholfrequenz für jeden der Messvorgänge im Wesentlichen gleich ist.

6. Verfahren nach einem der Ansprüche 3 bis 5, wobei jeder Messvorgang umfasst:
Zeitkorrelieren des Referenzsignals und des Reflexionssignals, um ein Messsignal zu bilden.

7. Verfahren nach Anspruch 6, wobei das Maß, das eine Signalstörung des Reflexionssignals angibt, das in dem Messvorgang empfangen wird, basierend auf dem Messsignal bestimmt wird, das in dem Messvorgang gebildet wird.

8. Verfahren nach einem der vorhergehenden Ansprüche, umfassend:
Verwerfen jedes Reflexionssignals, das versagt, das Signalstörungskriterium zu erfüllen; und
Bestimmen des Füllstands basierend auf mindestens einem übrigen Reflexionssignal.

9. Radarfüllstandanzeigesystem zum Bestimmen des Füllstands eines Produkts in einem Tank, umfassend:
einen Sendeempfänger zum Erzeugen, Senden und Empfangen elektromagnetischer Signale;
eine Ausbreitungsvorrichtung, die mit dem Sendeempfänger gekoppelt ist, um ein elektromagnetisches Sendesignal von dem Sendeempfänger in Richtung einer Oberfläche des Produkts in dem Tank auszubreiten und ein elektromagnetisches Reflexionssignal, das sich aus einer Reflexion des Sendesignals an der Oberfläche des Produkts ergibt, zurückzuführen; und
eine Verarbeitungsschaltungsanordnung, die mit dem Sendeempfänger gekoppelt und eingerichtet ist zum:
Steuern des Sendeempfängers, um für jede Sendeimpulswiederholfrequenz in einer Sequenz von unterschiedlichen Sendeimpulswiederholfrequenzen, einen Messvorgang durchzuführen, umfassend:
Erzeugen und Senden des Sendesignals in Form einer Impulsfolge von Sendeimpulsen, wobei die Impulsfolge die Sendeimpulswiederholfrequenz aufweist; und
Empfangen des Reflexionssignals;
Bestimmen, für jeden Messvorgang, eines Maßes, das eine Signalstörung des Reflexionssignals angibt, das in dem Messvorgang empfangen wird;
Bewerten, für jeden Messvorgang, des Maßes, das eine Signalstörung des Reflexionssignals angibt, hinsichtlich eines vordefinierten Signalstörungskriteriums; und
Bestimmen des Füllstands basierend auf mindestens einem der Reflexionssignale, die das Signalstörungskriterium erfüllen.

10. Radarfüllstandanzeigesystem nach Anspruch 9, wobei die Verarbeitungsschaltungsanordnung ferner eingerichtet ist, um den Sendeempfänger zu steuern, ein gepulstes Referenzsignal mit einer Referenzimpulswiederholfrequenz zu erzeugen, die für unterschiedliche Messvorgänge unterschiedlich ist.

11. Radarfüllstandanzeigesystem nach Anspruch 10, wobei eine Differenz zwischen der Sendeimpulswiederholfrequenz und der Referenzimpulswiederholfrequenz für jeden der Messvorgänge im Wesentlichen gleich ist.

12. Radarfüllstandanzeigesystem nach Anspruch 10 oder 11, wobei der Sendeempfänger einen Signalkorrelator umfasst, der eingerichtet ist, um das Referenzsignal und das Reflexionssignal zeitlich zu korrelieren, um ein Messsignal zu bilden.

13. Radarfüllstandanzeigesystem nach Anspruch 12, wobei die Verarbeitungsschaltungsanordnung eingerichtet ist, um das Maß, das eine Signalstörung des Reflexionssignals angibt, basierend auf dem Messsignal zu bestimmen, das durch den Signalkorrelator gebildet wird, der in dem Sendeempfänger enthalten ist.

14. Radarfüllstandanzeigesystem nach einem der Ansprüche 9 bis 13, wobei die Verarbeitungsschaltungsanordnung eingerichtet ist zum:
Verwerfen jedes Reflexionssignals, das versagt, das Signalstörungskriterium zu erfüllen; und
Bestimmen des Füllstands basierend auf mindestens einem übrigen Reflexionssignal.

15. Radarfüllstandanzeigesystem nach einem der Ansprüche 9 bis 14, wobei der Sendeempfänger eine PLL umfasst, die steuerbar ist, um Signale mit der Sendeimpulswiederholfrequenz zu erzeugen.

## Revendications

1. Procédé de détermination d'un niveau de remplissage d'un produit dans un réservoir à l'aide d'un système de jauge de niveau à radar incluant un émetteur-récepteur, un dispositif de propagation de signal et des circuits de traitement, le procédé comprenant les étapes suivantes :
l'exécution, pour chaque fréquence de répétition d'impulsion d'émission dans une séquence de différentes fréquences de répétition d'impulsion d'émission, d'une opération de mesure incluant :
la génération et l'émission d'un signal d'émission électromagnétique sous la forme d'un train d'impulsions composé d'impulsions d'émission, le train d'impulsions présentant la fréquence de répétition d'impulsion d'émission ;
la propagation du signal d'émission vers une surface du produit dans le réservoir ;
le renvoi d'un signal de réflexion électromagnétique résultant de la réflexion du signal d'émission à la surface vers l'émetteur-récepteur ; et
la réception du signal de réflexion ; et
la détermination, pour chaque opération de mesure, d'une mesure indiquant une perturbation de signal de réflexion reçu dans l'opération de mesure ;
l'évaluation, pour chaque opération de mesure, de la mesure indiquant une perturbation de signal du signal de réflexion compte tenu d'un critère de perturbation de signal prédéfini ; et
la détermination du niveau de remplissage sur la base de l'un au moins des signaux de réflexion respectant le critère de perturbation de signal.

2. Procédé selon la revendication 1, dans lequel la séquence de fréquences de répétition d'impulsion différentes inclut au moins trois fréquences de répétition d'impulsion différentes.

3. Procédé selon la revendication 1 ou 2, dans lequel chaque opération de mesure comprend :
la génération d'un signal de référence pulsé présentant une fréquence de répétition d'impulsion de référence.

4. Procédé selon la revendication 3, dans lequel la fréquence de répétition d'impulsion de référence est différente pour différentes opérations de mesure.

5. Procédé selon la revendication 4, dans lequel une différence entre la fréquence de répétition d'impulsion d'émission et la fréquence de répétition d'impulsion de référence est substantiellement la même pour chacune des opérations de mesure.

6. Procédé selon l'une quelconque des revendications 3 à 5, dans lequel chaque opération de mesure comprend :
la corrélation temporelle du signal de référence et du signal de réflexion pour former un signal de mesure.

7. Procédé selon la revendication 6, dans lequel la mesure indiquant une perturbation de signal du signal de réflexion reçu dans l'opération de mesure est déterminée sur la base du signal de mesure formé dans l'opération de mesure.

8. Procédé selon l'une quelconque des revendications précédentes, comprenant :
la non prise en compte de tout signal de réflexion ne respectant pas le critère de perturbation de signal ; et
la détermination du niveau de remplissage sur la base d'au moins un signal de réflexion restant.

9. Système de jauge de niveau à radar pour la détermination du niveau de remplissage d'un produit dans un réservoir, comprenant :
un émetteur-récepteur destiné à générer, émettre et recevoir des signaux électromagnétiques ;
un dispositif de propagation accouplé à l'émetteur-récepteur pour la propagation d'un signal d'émission électromagnétique de l'émetteur-récepteur vers une surface du produit dans le réservoir, et pour le renvoi d'un signal de réflexion électromagnétique résultant de la réflexion du signal d'émission à la surface du produit ; et
des circuits de traitement accouplés à l'émetteur-récepteur et configurés pour :
commander l'émetteur-récepteur pour effectuer, pour chaque fréquence de répétition d'impulsion d'émission dans une séquence de différentes fréquences de répétition d'impulsion d'émission, une opération de mesure incluant :
la génération et l'émission du signal d'émission sous la forme d'un train d'impulsions composé d'impulsions d'émission, le train d'impulsions présentant la fréquence de répétition d'impulsion d'émission ;
la réception du signal de réflexion ;
déterminer, pour chaque opération de mesure, une mesure indiquant une perturbation de signal de réflexion reçu dans l'opération de mesure ;
évaluer, pour chaque opération de mesure, la mesure indiquant une perturbation de signal du signal de réflexion compte tenu d'un critère de perturbation de signal prédéfini ; et
déterminer le niveau de remplissage sur la base de l'un au moins des signaux de réflexion respectant le critère de perturbation de signal.

10. Système de jauge de niveau à radar selon la revendication 9, dans lequel les circuits de traitement sont en outre configurés pour commander l'émetteur-récepteur afin de générer un signal de référence pulsé présentant une fréquence de répétition d'impulsion de référence différente pour des opérations de mesure différentes.

11. Système de jauge de niveau à radar selon la revendication 10, dans lequel une différence entre la fréquence de répétition d'impulsion d'émission et la fréquence de répétition d'impulsion de référence est substantiellement la même pour chacune des opérations de mesure.

12. Système de jauge de niveau à radar selon la revendication 10 ou 11, dans lequel l'émetteur-récepteur comprend un corrélateur de signaux configuré pour corréler temporellement le signal de référence et le signal de réflexion de manière à former un signal de mesure.

13. Système de jauge de niveau à radar selon la revendication 12, dans lequel les circuits de traitement sont configurés pour déterminer la mesure indiquant la perturbation de signal du signal de réflexion sur la base du signal de mesure formé par le corrélateur de signaux compris dans l'émetteur-récepteur.

14. Système de jauge de niveau à radar selon l'une quelconque des revendications 9 à 13, dans lequel les circuits de traitement sont configurés pour :
ignorer tout signal de réflexion ne respectant pas le critère de perturbation de signal ; et
déterminer le niveau de remplissage sur la base d'au moins un signal de réflexion restant.

15. Système de jauge de niveau à radar selon l'une quelconque des revendications 9 à 14, dans lequel l'émetteur-récepteur comprend une boucle à phase asservie commandable pour générer des signaux présentant la fréquence de répétition d'impulsion d'émission.
